(19) Europäisches Patentamt

European Patent Office

Office européen des brevets

(11) Veröffentlichungsnummer: **0 224 632 B1**

(12) **EUROPÄISCHE PATENTSCHRIFT**

(45) Veröffentlichungstag der Patentschrift: **26.08.92**

(21) Anmeldenummer: **86105390.8**

(22) Anmeldetag: **18.04.86**

(51) Int. Cl.⁵: **C10M 175/00**

(54) **Verfahren und Vorrichtung zur Reinigung wasserstofffreier fluorierter Schmiermittel.**

(30) Priorität: **06.12.85 DE 3543162**

(43) Veröffentlichungstag der Anmeldung:
**10.06.87 Patentblatt 87/24**

(45) Bekanntmachung des Hinweises auf die
Patenterteilung:
**26.08.92 Patentblatt 92/35**

(84) Benannte Vertragsstaaten:
**CH DE FR GB IT LI**

(56) Entgegenhaltungen:
**EP-A- 0 106 317**

**HYDROCARBON PROCESSING, Band 59, Nr.
9, September 1980, Seite 218, Houston, US;
"Percolation filtration"**

(73) Patentinhaber: **LEYBOLD AKTIENGESELL-
SCHAFT**
**Bonner Strasse 498**
**W-5000 Köln 51(DE)**

(72) Erfinder: **Bachmann, Paul, Dr.**
**Breslauer Strasse 21**
**W-5000 Köln 40(DE)**
Erfinder: **Berges, Hanns-Peter, Dr.**
**Neusser Strasse 25**
**W-5000 Köln 90(DE)**
Erfinder: **Götz, Dieter, Dr.**
**Adam-Lindner-Strasse 2**
**W-5000 Köln 90(DE)**

(74) Vertreter: **Leineweber, Jürgen, Dipl.-Phys.**
**Nagelschmiedshütte 8**
**W-5000 Köln 40(DE)**

**Beschreibung**

Die Erfindung bezieht sich auf ein verfahren zur Abtrennung von Kohlenwasserstoff-Verunreinigungen aus chemisch inerten Schmiermitteln wie perfluorierte Polyether, Chlorfluor-Kohlenstoffe oder dergleichen, mit Hilfe einer Filtereinrichtung. Außerdem betrifft die Erfindung für die Durchführung dieses Verfahrens geeignete Vorrichtungen.

In der chemischen Industrie, in der Luft- und Raumfahrt sowie auch in der Vakuumtechnik ist es bekannt, perfluorierte Polyether oder gesättigte, wasserstoffreie Chlorfluor-Kohlenstoffe (Polytrifluorchlorethylene) als Schmiermittel einzusetzen. Die Verwendung dieser Schmier- oder Dichtmittel ist dann üblich, wenn der Einsatz inerter Schmiermittel gefordert wird. Das ist z.B. der Fall, wenn sauerstoffreiche Gase zu pumpen sind. Bei einer Verwendung der sonst üblichen, Kohlenwasserstoffe enthaltenden Mineralöle bestände in diesem Fall eine Explosionsgefahr.

Perfluorierte Polyether sind zum Beispiel unter dem Handelsnamen "Fomblin" (Warenzeichen der Firma Montedison) und Chlorfluorkohlenstoffe zum Beispiel unter dem Handelsnamen "Halocarbon" (Warenzeichen der Halocarbon Products Company) auf dem Markt erhältlich. Weitere, dem "Fomblin" äquivalente Produkte sind "Krytox" (DuPont), "Demnum" (Daikin), "Tyrenofluid" (Tyrenochemie) usw..

Während des Betriebes wird das Schmiermittel mit den unterschiedlichsten Substanzen kontaminiert, z.B. mit Feststoffen, Flüssigkeiten, Gasen und Dämpfen. Ziel der Erfindung ist es, kontaminierte Schmiermittel der eingangs genannten Art zu reinigen und damit wiederverwendbar zu machen.

Aus der DE-PS 32 37 930 ist es bekannt, Schmiermittel der betroffenen Art durch Erwärmen, Mischen mit Kohlepuder und anschließendes Filtrieren zu reinigen. Eine gründliche Beseitigung von Kohlenwasserstoff- bzw. Mineralöl-Verunreinigungen ist durch dieses Verfahren jedoch nicht möglich. In der genannten Patentschrift wird deshalb weiterhin vorgeschlagen, das zu reinigende Schmiermittel zunächst in einem Chlorfluor-Kohlenwasserstoff zu lösen, danach ein Fettlösungsmittel hinzuzugeben und das dadurch ausfallende fluorierte Schmiermittel abzutrennen. Dieses chemische Reinigungsverfahren ist relativ aufwendig und wurde deshalb bisher nur im Labormaßstab durchgeführt.

Tiefbettfilter mit Adsorptionsmitteln sind an sich bekannt (vgl. "Hydrocarbon Processing", Band 59, Hr. 9, Sept. 1980, Seite 218 und "Lubricants and Related Products", Klamann 1984, Seiten 70 bis 73 und 84 bis 87). Die vorbekannten Filter dienen jedoch ausschließlich der Reinigung von kohlenwasserstoffhaltigen Schmiermitteln, d.h., die kohlenstoffhaltigen Schmiermittel sollen das Filtermaterial passieren, die Verunreinigungen jedoch nicht.

Der vorliegenden Erfindung liegt die Aufgabe zugrunde, ein Verfahren der eingangs genannten Art zu schaffen, mit dem in relativ einfacher Weise, und zwar ohne den Einsatz von Lösungs- oder Ausfällmitteln, eine Reinigung fluorierter, also kohlenwasserstoff-freier Schmiermittel möglich ist.

Erfindungsgemäß wird diese Aufgabe dadurch gelöst, daß eine an sich bekannte, als Tiefbettfilter ausgebildete Filtereinrichtung verwendet wird, die als Filtermaterial ein Adsorptionsmittel enthält. Überraschenderweise hat sich gezeigt, daß eine Filtereinrichtung dieser Art nicht nur in der Lage ist, mechanische Verunreinigungen zurückzuhalten, sondern auch und insbesondere Kohlenwassersoff-Verunreinigungen aus den inerten Schmiermitteln abzutrennen. Wählt man das Filterbett ausreichend tief oder läßt man das zu reinigende Schmiermittel mehrmals durch das Filterbett strömen, dann erhält man als Ergebnis ein farb- und geruchloses Fluid mit den gleichen physikalischen Eigenschaften (Viskosität, Brechungsindex, Neutralisationszahl, Dichte) wie die Ausgangssubstanz.

Als Filtermaterial dient ein Adsorptionsmittel, z.B. aktiviertes Aluminiumoxid, das z.B. in Form von aktivierter Tonerde oder aktiviertem Bauxit vorliegen kann. Auch Bleicherde, Tonmineralien wie z. B. Bentonit, Silicagel und dergleichen sind als Filtermaterialien geeignet.

Körnige Filtermaterialien dieser Art haben eine große spezifische Oberfläche. Außerdem besitzen sie eine hohe Adsorptionsfähigkeit für die gelösten Verunreinigungen. Insbesondere hat aktiviertes Aluminiumoxid eine hohe Adsorptionsfähigkeit für gelöste Kohlenwasserstoffe. Auch andere flüssige Verunreinigungen wie $TiCl_4$ (Titantetrachlorid) werden zurückgehalten. Schließlich ist das Filtermaterial dazu geeignet, Feststoffpartikel mit einer Körnung bis in den Sub-$\mu$-Bereich zurückzuhalten.

Vorteilhaft ist es, in der zur Filtereinrichtung führenden Leitung eine Entgasungsstufe, zweckmäßigerweise mit einer Heizung, vorzusehen. Infolge des niedrigeren Druckes und der erhöhten Temperatur werden leicht siedende oder auch sublimierende Bestandteile (z. B. HF, HCl, $C_2Cl_6$) in dieser Stufe abgeschieden.

Besonders vorteilhaft ist es, als Reinigungseinrichtung eine handelsübliche schmiermittelgedichtete Verdrängervakuumpumpe zu verwenden, die mit einem Reinigungskreislauf für das Schmiermittel ausgerüstet ist. Voraussetzung für die erwünschte Reinigungswirkung ist, daß sich in diesem Reinigungskreislauf eine Filtereinrichtung mit aktiviertem Aluminiumoxid als Filtermaterial befindet. Das in einer derartigen Vakuumpumpe befindliche Schmiermittel strömt ständig in einem Kreislauf, der von dem überlicherweise unter Atmosphärendruck stehenden Ölkasten über eine Förderpumpe durch die Filtereinrichtung zum Schöpfraum führt und dann über den Pumpenauslaß wieder zurück in den Ölkasten. In diesem Kreislauf findet also sowohl die gewünschte Filtration als auch eine Vakuumentgasung statt. Üblicherweise ist mit dem Betrieb von Vakuumpumpen auch eine Temperaturerhöhung des Schmiermittels verbunden, so daß die Entgasung im Schöpfraum bei erhöter Temperatur stattfindet.

Zweckmäßigerweise ist die Vakuumpumpe mit einer Gasballasteinrichtung ausgerüstet. Bei geöffnetem Gasballast findet eine intensive Vermischung der zugeführten Luft mit den flüchtigen Substanzen statt, so daß diese schnell und wirkungsvoll aus dem zu reinigenden Schmiermittel entfernt werden.

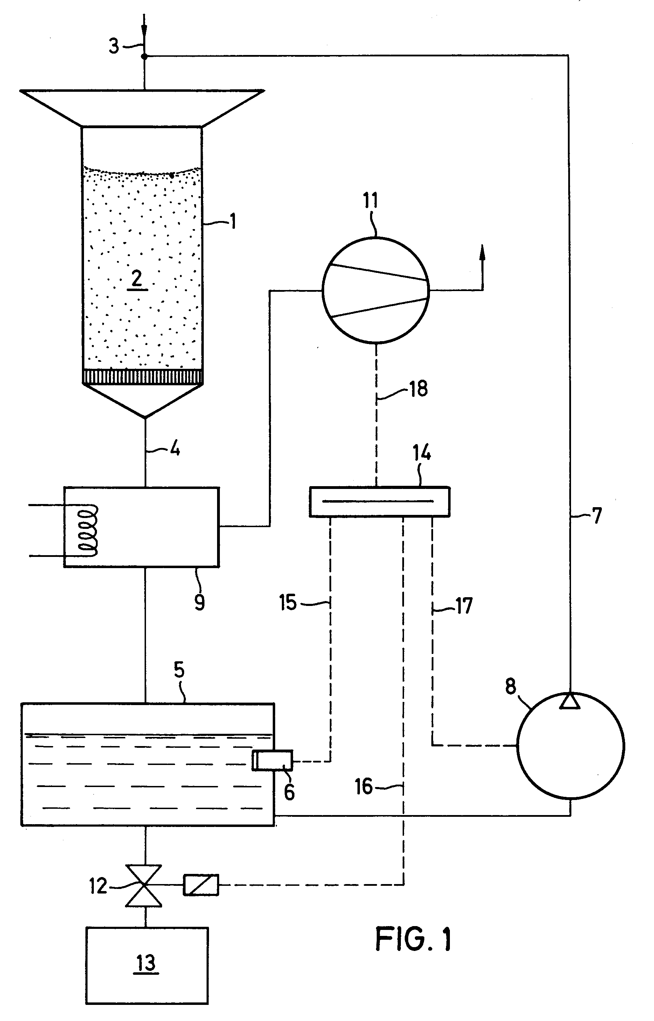

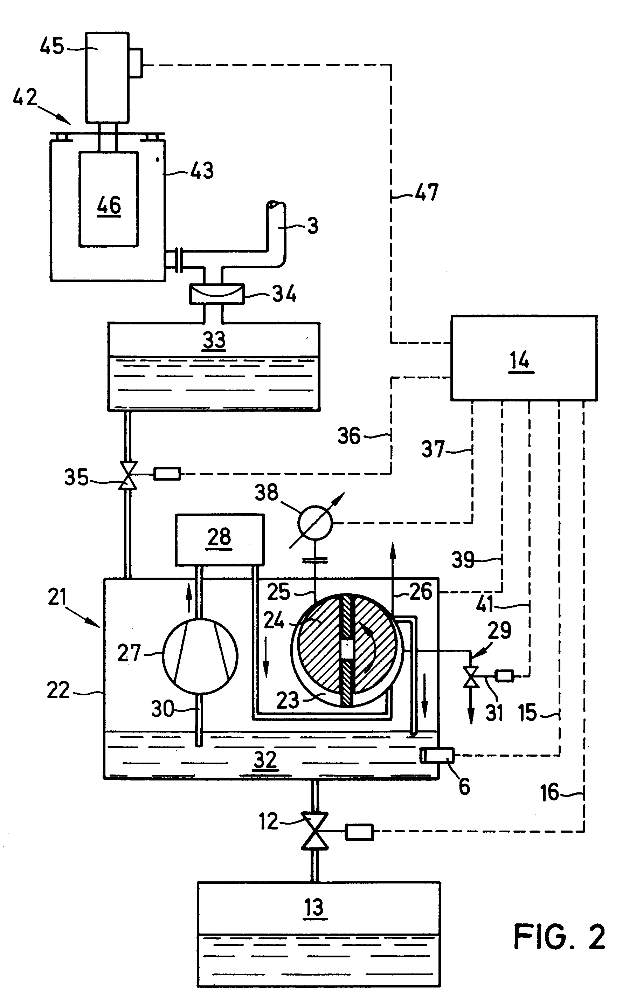

Weitere Vorteile und Einzelheiten der Erfindung sollen anhand von in den Figuren 1 und 2 dargestellten Ausführungsbeispielen erläutert werden.

Fig. 1 zeigt schematisch eine Vorrichtung nach der Erfindung. Mit 1 ist ein Bettfilter bezeichnet, das als Filtermaterial 2 aktiviertes Aluminiumoxid enthält.

Zu reinigendes fluoriertes Schmiermittel wird bei 3 in die Filtereinrichtung 1 eingeleitet. Es verläßt diese durch den Auslauf 4, der über die Entgasungsstufe 9 in den Auffangbehälter 5 mündet. Dieser ist mit einem Sensor 6, z. B. einem Trübungsmesser, ausgerüstet, mit dem die Qualität des Schmiermittels kontrollierbar ist.

An die Entgasungsstufe, die schematisch als Block dargestellt ist, ist die Vakuumpumpe 11 angeschlossen. In dieser Stufe 9 erfolgt die Abtrennung von flüchtigen bzw. kondensierbaren Verunreinigungen aus dem zu reinigenden Schmiermittel.

Ist der gewünschte Reinheitsgrad nach einem Durchlauf nicht erreicht, wird das Schmiermittel über die Leitung 7 der Filtereinrichtung 1 erneut zugeführt, und zwar mit Hilfe der Förderpumpe 8.

Meldet der Sensor 6, daß der gewünschte Reinheitsgrad erreicht ist, wird das gereinigte Schmiermittel über das Ventil 12 in den Behälter 13 abgelassen.

Zweckmäßigerweise erfolgt der Betrieb der beschriebenen Einrichtung automatisch. Dazu ist eine zentrale Steuereinheit 14 vorgesehen, der über die Leitung 15 die Signale des Sensors 6 zugeführt werden. In Abhängigkeit dieser Signale erfolgt die Betätigung bzw. das Inbetriebsetzen oder Abschalten des Ventils 12, der Förderpumpe 8 und der Vakuumpumpe 11 über die Steuerleitungen 16, 17 und 18.

Fig. 2 zeigt ein Ausführungsbeispiel, bei dem eine Verdrängervakuumpumpe 21 zur Reinigung des fluorierten Schmiermittels verwendet wird. Als Beispiel ist eine schematisch dargestellte Drehschiebervakuumpumpe gewählt, deren Gehäuse mit 22, Schöpfraum mit 23, Rotor mit 24, Einlaß mit 25 und Auslaß mit 26 bezeichnet sind. Außerdem ist die Vakuumpumpe 21 mit einem Schmiermittelkreislauf ausgerüstet, der die Leitung 30 sowie die Förderpumpe 27 und die Filtereinrichtung 28 umfaßt. Schließlich weist die Vakuumpumpe eine Gasballasteinrichtung 29 auf, welche das Ventil 31 umfaßt. Beim dargestellten Ausführungsbeispiel durchsetzt die gesamte von der Förderpumpe 27 geförderte Schmiermittelmenge die Filtereinrichtung 28 (Hauptstromfilter). Die Filtereinrichtung kann auch in einem Bypass angeordnet sein (Nebenstromfilter).

Das im Ölsumpf 32 befindliche, zu reinigende Schmiermittel wird mittels der Förderpumpe 27 durch die Filtereinrichtung 28 transportiert. Diese Filtereinrichtung 28 enthält wieder Adsorptionsmaterial, vorzugsweise aktiviertes Aluminiumoxid als Filtermaterial.

Von dort aus gelangt das Schmiermittel in den Schöpfraum 23. Der Einlaß der Vakuumpumpe bleibt während des Reinigungsbetriebes geschlossen.

Innerhalb des Schöpfraumes erfolgt die Verdampfung der flüchtigen bzw. kondensierbaren Verunreinigungen, und zwar infolge des niedrigen Druckes und der üblicherweise mit dem Betrieb der Vakuumpumpe verbundenen erhöhten Temperatur. Das Abführen der flüchtigen Substanzen wird durch die Zuschaltung des Gasballastes 29 gefördert. Während des Reinigungsprozesses ist deshalb das Ventil 31 geöffnet.

In der Filtereinrichtung 28 gereinigtes und im Schöpfraum 23 entgastes Schmiermittel gelangt über den Auslaß 26 wieder in den Ölsumpf 32. Dieser ist mit Sensor 6 ausgerüstet, mit dem die Qualität des Schmiermittels überwacht wird. Ist der gewünschte Reinigungsgrad noch nicht erreicht, dann bleibt die Vakuumpumpe 21 in Betrieb. Ist der gewünschte Reinigungsgrad erreicht, wird die Pumpe 21 abgeschaltet und das gereinigte Schmiermittel über das Ventil 12 in den Behälter 13 abgeleitet.

Der Vakuumpumpe 21 vorgeschaltet ist ein Sammelbehälter 33 für verunreinigtes Schmiermittel. Diesem wird über die Leitung 3 und das Grobfilter 34 das zu reinigende Schmiermittel zugeführt. Von dort aus wird es diskontinuierlich über das Ventil 35 der Vakuumpumpe 21 zugeführt.

Mit 14 ist wieder eine zentrale Steuer- und Regeleinheit bezeichnet, die einen automatisch ablaufenden Reinigungsbetrieb ermöglicht. Die Steuerleitung 36 dient der Betätigung des Ventils 35. Mit 37 ist eine Leitung bezeichnet, die zu einem an den Einlaß 25 der Pumpe angeschlossenen Druckmeßgerät 38 führt. Informationen über das erreichte Vakuum werden darüber an die Zentraleinheit 14 gegeben. Über die Leitung 39 erfolgt die Inbetriebnahme bzw. das Stillsetzen der Vakuumpumpe 21. Gleichzeitig damit wird die Förderpumpe 27 ein- und abgeschaltet. Schließlich ermöglicht die Steuerleitung 41 das Zu- und Abschalten des Gasballastes 29. Die Steuerleitungen 15 und 16 dienen wie beim Ausführungsbeispiel nach Fig. 1 der Übermittlung von Informationen über den Reinheitsgrad der zu reinigenden Flüssigkeit vom Sensor 6 zur Steuereinheit 14 bzw. der Betätigung des Ventils 12.

Der Ablauf des Reinigungsprozesses kann z. B. in der Weise erfolgen, daß zunächst die gewünschte Menge Schmiermittel über das Ventil 35 in die Vakuumpumpe 21 eingelassen wird. Diese Menge entspricht der Schmiermittelmenge, die die gewählte Vakuumpumpe üblicherweise benötigt.

Danach wird die Vakuumpumpe 21 bei geschlossenen Ventilen 12 und 35 und bei geöffnetem Gasballastventil 31 in Gang gesetzt, und zwar so lange, bis der Sensor 6 anzeigt, daß der gewünschte Reinheitsgrad erreicht ist.

Mit Hilfe des Sensors 6 und auch mit Hilfe des Druckmeßgerätes 38 kann eine ständige Kontrolle des Reinigungseffektes durchgeführt werden. Das Druckmeßgerät 38 meldet ständig den erreichten Druck an die Zentraleinheit 9. Aus diesen Druckwerten kann auf das Vorhandensein von flüchtigen bzw. kondensierbaren Substanzen geschlossen werden, und zwar insbesondere dann, wenn für die Zeit der Druckmessung das Gasballastventil 31 geschlossen wird.

Melden der Sensor 6 und das Druckmeßgerät 40 Werte, die das Erreichen des gewünschten Reinheitsgrades erkennen lassen, dann wird die Pumpe 21 abgeschaltet. Danach erfolgt der Ablaß des gereinigten Schmiermittels über das Ventil 12 in den Behälter 13 und - nach dem Schließen des Ventils 12 -das erneute Einfüllen von verschmutztem Schmiermittel über das Ventil 35 in die Vakuumpumpe 21.

Die verwendete Vakuumpumpe sollte einen möglichst niedrigen Totalenddruck haben. Außerdem sollte das Vehältnis von Gasballastmenge zu Saugvermögen möglichst groß sein. Die Pumpentemperatur sollte bei Gasballastbetrieb möglichst hoch sein. Im übrigen richtet sich der zu wählende Pumpentyp nach der Menge des anfallenden und zu reinigenden fluorierten Schmiermittels.

Der besondere Vorteil der Erfindung liegt darin, daß die Reinigung des fluorierten Schmiermittels automatisiert werden kann. Dadurch daß eine handelsübliche Vakuumpumpe verwendet werden kann, ist die Aufarbeitung des Schmiermittels direkt vom Anwender durchführbar. Der Aufwand ist im Vergleich zu den bisher bekannten Reinigungsverfahren minimal.

Bei einer vorteilhaften Weiterbildung der Erfindung ist dem Auffangbehälter 33 eine Zentrifuge 42 vorgelagert. Sie besteht aus dem Behälter 43, der mit dem Deckel 44 verschließbar ist. Die Welle des Zentrifugenmotors 45 durchsetzt den Deckel 44. Innerhalb des Behälters 43 können an dieser Welle konventionelle Filterelemente 46 befestigt werden, die verunreinigtes fluoriertes Schmiermittel enthalten. Bei Anlagen zur Herstellung von Halbleitern fallen Filterelemente dieser Art häufig an. Ausgeschleudertes Schmiermittel strömt über das Grobfilter 34 in den Auffangbehälter 33.

Der Betrieb der Zentrifuge 42 kann in den automatischen Ablauf der Reinigungseinrichtung miteinbezogen werden.

Zum Beispiel kann während einer Reinigungsphase, die je nach Schmiermittelmenge 1/2 bis 5 h betragen kann, eine vorab in der Zentrifuge 42 montierte Filterpatrone 46 zentrifugiert werden. Das Ein- und Abschalten des Motors 45 kann dann von der Steuereinheit 14 erfolgen, die über die Signalleitung 47 mit dem Zentrifugenmotor verbunden ist.

Die Rückgewinnung und Reinigung von inerten Schmiermitteln aus Filterpatronen kann z. B. folgendermaßen ablaufen: Die Vakuumpumpe 21 ist mit Schmiermittel gefüllt. Das verunreinigte, mit Schmiermittel gefüllte Filterelement 46 wird von der Filtereinrichtung der eingesetzten Vakuumpumpe entfernt. Das ohne zusätzliche Hilfsmittel ausfließende Schmiermittel wird über die Leitung 3 und das Grobfilter 34 in den Sammelbehälter 33 eingefüllt. Das Filterelement 46 mit dem restlichen Schmiermittel wird an der Welle des Zentrifugalmotors 45 befestigt. Durch Schließen des Deckels 44 bzw. durch Betätigen eines Schalters an der Zentraleinheit 14 wird ein automatischer Funktionsablauf in Gang gesetzt, der entweder über eine Automatik oder eine zu betätigende Zeitschaltuhr zeitlich begrenzt ist. Durch diese Betätigung werden folgende Funktionen in Gang gesetzt:

- Der Zentrifugenmotor 45 wird eingeschaltet, das ausgeschleuderte Schmiermittel läuft über das Grobfilter 34 in den Sammelbehälter 33.
- Bei geschlossenen Ventilen 35 und 12 läuft die Vakuumpumpe 21 an und setzt den Reinigungsprozeß in Gang.

Nach Ablauf der vorgewählten Zeit werden automatisch folgende Funktionen ausgelöst: Der Zentrifugenmotor 45 und die Vakuumpumpe 21 werden abgeschaltet. Das Ventil 12 öffnet, und das gereinigte Schmiermittel wird in den Behälter 13 abgelassen. Nach einer vorgegebenen Zeit wird das Ventil 12 geschlossen, das Ventil 35 geöffnet und damit erneut verschmutztes Schmiermittel in die Vakuumpumpe 21 gefüllt. Das Ventil 35 schließt, wenn die gewünschte Menge Schmiermittel in die Vakuumpumpe 21 eingelassen ist. Der Deckel 44 der Zentrifuge 42 läßt sich nach Abschalten des Zentrifugenmotors 45 öffnen, das ausgeschleuderte Filterelement 46 kann gegen ein anderes Filterelement ausgetauscht und der beschriebene Funktionsablauf nach Schließen des Deckels 44 erneut in Gang gesetzt werden.

## Patentansprüche

1. Verfahren zur Abtrennung von Kohlenwasserstoff-Verunreinigungen aus wasserstofffreien fluorierten Schmiermitteln, wie perfluorierte Ester, Chlorfluorkohlenstoffe oder dergleichen, mit Hilfe einer Filtereinrichtung, dadurch gekennzeichnet , daß eine an sich bekannte, als Tiefbettfilter ausgebildete Filtereinrichtung (1, 28) verwendet wird, die als Filtermaterial (2) ein Adsorptionsmittel enthält.

2. Verfahren nach Anspruch 1 , dadurch gekennzeichnet, daß aktiviertes Aluminiumoxid oder aktiviertes Aluminiumoxid enthaltende Mittel als Filtermaterial (2) verwendet wird.

3. Verfahren nach Anspruch 1, dadurch gekennzeichnet, daß Tonerde, Bauxit, Bleicherde, Tonmineralien, Silicagel oder dergleichen als Filtermaterial (2) verwendet wird.

4. Verfahren nach Anspruch 1, 2 oder 3, dadurch gekennzeichnet, daß das zu reinigende Schmiermittel mehrfach im Kreislauf durch die Filtereinrichtung (1, 28) und durch eine Entgasungsstufe (9, 23) geführt wird.

5. Verfahren nach Anspruch 4, dadurch gekennzeichnet, daß das zu reinigende Schmiermittel im Bereich der Entgasungsstufe (9, 23) aufgeheizt wird.

6. Verfahren nach einem der Ansprüche 1 bis 5, dadurch gekennzeichnet , daß das zu reinigende Schmiermittel nach dem Durchtritt durch die Filtereinrichtung (1) in einem Auffangbehälter (5) gesammelt wird und daß dort die Eigenschaften des zu reinigenden Schmiermittels mit mindestens einem Sensor (6) kontrolliert werden.

7. Verfahren nach einem der Ansprüche 1 bis 6, dadurch gekennzeichnet , daß eine schmiermittelgedichtete Verdrängervakuumpumpe (21), vorzugsweise eine Drehschieberpumpe, verwendet wird, daß als Schmiermittel für die Vakuumpumpe (21) das zu reinigende Schmiermittel verwendet wird und daß das Schmiermittel im Kreislauf durch die Filtereinrichtung (28) mit dem Adsorptionsmittel geführt wird.

8. Verfahren nach Anspruch 7, dadurch gekennzeichnet, daß eine Verdrängervakuumpumpe mit einer Gasballasteinrichtung (29) verwendet wird und daß während des Betriebs der Pumpe die Gasballastzufuhr geöffnet ist.

9. Verfahren nach Anspruch 7 oder 8, dadurch gekennzeichnet, daß der Druck im Bereich des geschlossenen Einlasses der Pumpe gemessen wird und der Kontrolle des Reinigungseffektes in Bezug auf flüchtige Substanzen dient.

10. Verfahren nach Anspruch 8 und 9, dadurch gekennzeichnet, daß die Gasballastzufuhr während der Druckmessung geschlossen wird.

11. Vorrichtung zur Durchführung des Verfahrens nach einem der Ansprüche 8 oder 9, dadurch gekennzeichnet, daß sie eine schmiermittelgedichtete Verdrängervakuumpumpe (21) mit einem Ölsumpf (32), vorzugsweise eine Drehschieberpumpe, ist, die eine Gasballasteinrichtung (29) und einen Schmiermittelkreislauf mit der Filtereinrichtung (28) aufweist und an deren im übrigen geschlossenen Einlaß (25) ein Druckmeßgerät (38) angeschlossen ist.

12. Vorrichtung nach Anspruch 11, dadurch gekennzeichnet, daß ein Sammelbehälter (33) für verunreinigtes Schmiermittel über eine mit einem Ventil (35) ausgerüstete Leitung mit dem Ölsumpf (32) in Verbindung steht.

13. Vorrichtung nach Anspruch 12, dadurch gekennzeichnet, daß dem Sammelbehälter (33) eine Zentrifuge (42) zur Rückgewinnung von inerten Schmiermitteln aus Filterelementen vorgeschaltet ist.

14. Vorrichtung nach einem der Ansprüche 11 bis 14, dadurch gekennzeichnet, daß zur Ermöglichung eines weitgehend automatischen Ablaufs der Rückgewinnung und Reinigung des inerten Schmiermittels und der anschließenden Reinigung eine Steuereinheit (14) vorgesehen ist.

## Claims

1. A process for the removal of hydrocarbon impurities from hydrogen-free fluorinated lubricants, such as perfluorinated esters, chlorofluorocarbons or the like with the aid of a filtering device, characterized by the fact that a filtering device (1, 28) known in itself, in the form of a percolation filter which contains an adsorbent as filter material (2), is used.

2. A process according to Claim 1, characterized by the fact that activated aluminium oxide or an agent containing activated aluminium oxide is used as filter material (2).

3. A process according to Claim 1, characterized by the fact that clay, bauxite, bleaching earth, clay minerals, silica gel or the like is used as filter material (2).

4. A process according to Claim 1, 2 or 3, characterized by the fact that the lubricant to be purified is circulated repeatedly through the filtering device (1, 28) and through a degassing stage (9, 23).

5. A process according to Claim 4, characterized by the fact that the lubricant to be purified is heated in the zone of the degassing stage (9, 23).

6. A process according to one of Claims 1 to 5, characterized by the fact that the lubricant to be purified, after passing through the filtering device (1), is collected in a receiving vessel (5) and that there the properties of the lubricant to be purified are monitored with at least one sensor (6).

7. A process according to one of Claims 1 to 6, characterized by the fact that a lubricant-sealed positive-displacement vacuum pump (21), preferably a rotary slide-valve pump, is used, that the lubricant to be purified is used as lubricant for the vacuum pump (21), and that the lubricant is circulated through the filtering device (28) with the adsorbent.

8. A process according to Claim 7, characterized by the fact that a positive-displacement vacuum pump with a gas ballast device (29) is used and that during operation of the pump the gas ballast inlet is opened.

9. A process according to Claim 7 or 8, characterized by the fact that the pressure in the zone of the closed inlet of the pump is measured and is used to monitor the purifying effect with regard to volatile substances.

10. A process according to Claim 8 and 9, characterized by the fact that the gas ballast inlet is closed during the pressure measurement.

11. An apparatus for carrying out the process according to one of Claims 8 or 9, characterized by the fact that it is a lubricant-sealed positive-displacement vacuum pump (21) with an oil sump (32), preferably a rotary slide-valve pump, which has a gas ballast device (29) and a lubricant circuit with the filtering device (28) and to whose inlet (25), which in other respects is closed, a pressure gauge (38) is connected.

12. An apparatus according to Claim 11, characterized by the fact that a collecting vessel (33) for contaminated lubricant is connected with the oil sump (32) via a line fitted with a valve (35).

13. An apparatus according to Claim 12, characterized by the fact that a centrifuge (42) for recovery of inert lubricants from filter elements is connected before the collecting vessel (33).

14. An apparatus according to one of Claims 11 to 14, characterized by the fact that, in order to make possible a largely automatic operating sequence of the recovery and purification of the inert lubricant and of the subsequent purification, a control unit (14) is provided.

**Revendications**

1. Procédé pour séparer, de lubrifiants fluorés non hydrogénés, comme des esters perfluorés, des fluorochlorures de carbone ou analogues, les impuretés du type hydrocarbures, à l'aide d'un dispositif de filtration, procédé caractérisé par le fait que l'on emploie un dispositif de filtration (1, 28) connu en soi, qui est conçu sous forme de lit filtrant profond et qui contient comme matériau filtrant (2) un agent d'adsorption.

2. Procédé selon la revendication 1, caractérisé par le fait que l'on emploie comme matériau filtrant (2) de l'oxyde d'aluminium activé ou un agent contenant de l'oxyde d'aluminium activé.

3. Procédé selon la revendication 1, caractérisé par le fait que l'on emploie comme matériau filtrant (2) de l'alumine, de la bauxite, de la terre décolorante, des minéraux argileux, du gel de silice ou analogues.

4. Procédé selon la revendication 1, 2 ou 3, caractérisé par le fait que le lubrifiant à épurer passe plusieurs fois en parcours cyclique, par le dispositif de filtration (1, 28) et par un étage de dégazage (9, 23).

5. Procédé selon la revendication 4, caractérisé par le fait que dans la zone de l'étage de dégazage (9, 23), on chauffe le lubrifiant à épurer.

6. Procédé selon l'une des revendications 1 à 5, caractérisé par le fait qu'après son passage à travers le dispositif de filtration (1), on collecte le lubrifiant à épurer dans un récipient de collecte (5) et qu'on y contrôle les caractéristiques du lubrifiant à épurer à l'aide d'au moins un détecteur (6).

7. Procédé selon l'une des revendications 1 à 6, caractérisé par le fait que l'on emploie une pompe à vide à refoulement (21) étanche au lubrifiant, de préférence une pompe à palettes, par le fait que l'on emploie, comme lubrifiant pour la pompe à vide (21), le lubrifiant à épurer et par le fait que le lubrifiant passe, en parcours cyclique, à travers le dispositif de filtration (28) avec le moyen d'adsorption.

8. Procédé selon la revendication 7, caractérisé par le fait que l'on emploie une pompe à vide à refoulement avec un dispositif de charge de gaz (29) et que pendant la marche de la pompe l'arrivée de la charge de gaz est ouverte.

9. Procédé selon lar evendication 7 ou 8, caractérisé par le fait que l'on mesure la pression au voisinage de l'entrée, fermée, de la pompe et que cette mesure sert au contrôle de l'effet d'épuration en ce qui concerne les substances volatiles.

10. Procédé selon la revendication 8 ou 9, caractérisé par le fait que l'on ferme l'arrivée de la charge de gaz pendant la mesure de la pression.

11. Installation pour la mise en oeuvre du procédé selon l'une des revendications 8 ou 9, caractérisée par le fait qu'elle est une pompe à vide à refoulement (21), étanche au lubrifiant, avec un puisard d'huile (32), de préférence une pompe à palettes, qui présente un dispositif (29) de charge de gaz et un parcours cyclique du lubrifiant passant par le dispositif de filtration (28) et qu'à son entrée (25), habituellement fermée, est relié un manomètre (38).

12. Installation selon la revendication 11, caractérisée par le fait qu'un récipient de collecte (33) pour le lubrifiant non épuré est relié avec le puisard d'huile (32) par l'intermédiaire d'une conduite équipée d'une vanne (35).

13. Installation selon la revendication 12, caractérisée par le fait qu'en amont du récipient de collecte (33) est installée une centrifugeuse (42) pour la récupération du lubrifiant inerte provenant des éléments filtrants.

14. Installation selon l'une des revendications 11 à 14, caractérisée par le fait qu'une unité de commande (14) est prévue pour permettre un déroulement largement automatique de la récupération et de l'épuration du lubrifiant inerte et de l'épuration qui fait suite.

FIG. 1

FIG. 2